# EUROPEAN PATENT SPECIFICATION

(11) **EP 0 629 349 B1**
(45) Date of publication and mention of the grant of the patent: **19.11.1997**
(21) Application number: 94201745.0
(22) Date of filing: 17.06.1994
(51) Int. Cl.: A23C 19/05, A23C 19/068

(54) **Process for the preparation of a 20+ cheese or cheese product**
Verfahren zur Herstellung eines 20+ Käse oder Käseproduktes
Procédé de préparation d'un fromage ou produit de fromage du type 20+

(30) Priority: 18.06.1993 NL 9301070
(43) Date of publication of application: 21.12.1994
(73) Proprietor: FRIESLAND (FRICO-DOMO) COOPERATIEVE B.A., NL-8938 AN Leeuwarden (NL)
(72) Inventor: Hup, Gerhard, NL-8921 TX Leeuwarden (NL); van Arem, Everhardus Jacobus Franciscus, NL-8802 CR Franeker (NL)
(74) Representative: Smulders, Theodorus A.H.J., Ir.

(56) References cited:
- EP-A- 0 281 167
- EP-A- 0 359 295
- EP-A- 0 427 307
- EP-A- 0 520 581
- MILCHWISSENSCHAFT., vol.34, no.2, 1979, MUNCHEN DE pages 65 - 68 R. ABRAHAMSEN 'Cheesemaking from milk fortified with ultrafiltrated whey protein concentrate'

## Description

This invention relates to a half-hard cheese or a half-hard cheese product with a low fat content. More specifically, the invention relates to a so-called 20⁺ cheese or 20⁺ cheese product. The designation "20⁺" is used to indicate that the finished cheese or the finished cheese product has a fat content of between 20 and 25%, based on the dry matter.

It is generally known (see for instance Dr. Heinrich Mair-Waldburg, Handbuch der Käse, (1974), Volkswirtschaftlicher Verlag GmbH, Kempten (Allgäu), Germany, in particular page 73) that the fat fraction in cheese plays an essential role in both the taste sensation and the consistency of cheese. When cheese has only a low fat content, problems regarding flavour as well as consistency arise.

However, consumers increasingly appreciate products with a low fat content.

Accordingly, there is a need for a cheese or a cheese product that contains relatively little fat and yet has a good flavour and the desired consistency.

Abrahamsen has described processes for cheesemaking from milk fortified with ultrafiltrated whey protein concentrate (WPC) in Milchwissenschaft 34, No. 2 (1979) 65-68. One of these processes leads to a low fat cheese of the Gouda type. This cheese was prepared using a WPC containing 19% solids and 11.2% proteins, which was heat treated at 85°C for 10 minutes and mixed with the milk in portions of 5-10%. In another process, addition of 6% WPC (with a solids content of 11.3% and a protein content of 5.45%) to the milk resulted in cheese with 20% fat in the solids.

As to the ripening of these low fat rennet cheeses the article indicates that a slower proteolysis in cheese from milk fortified with WPC is obtained as compared with cheeses from normal milk. As the skilled man knows, proteolysis is responsible for the consistency and flavour of a cheese.

European patent application 0 427 307 discloses a process for the preparation of low fat dairy products by aggregation of casein in milk, with a part of the milk fat being replaced with hydrated, denatured protein particles of an average particle size of between 0.1 and 40 µm. When a half-hard cheese is prepared, protein particles, and in particular whey protein particles, of an average particle size of 2-20 µm are used. The whey protein particles used are prepared by heating a solution of non-denatured whey proteins at a concentration below the gelation concentration to at least the pasteurization temperature. A part of the whey proteins is thus denatured by heat and subsequently acidified to a pH of between 4.0 and 5.5, so that particles of an average particle size of 20 µm at a maximum are produced. After separation, these particles, which contain approximately 85% water, can be neutralised. In the example of this European patent application, a 30⁺ cheese is prepared, the flavour of which is clearly inferior to that of a full-cream 48⁺ cheese.

The object of the present invention is to prepare a half-hard cheese or a half-hard cheese product which satisfies the above-mentioned requirements. More specifically, the object is to prepare a 20⁺ cheese or a 20⁺ cheese product of a good consistency and an eminent flavour profile in line with that of a full-cream cheese.

This object is realised by the use of the process according to the invention.

More specifically, the invention relates to a process for the preparation of a cheese or cheese product, comprising the steps of adding a product resembling low-fat milk to cheese milk in an amount of 0.2-2 wt.%, based on the dried solids and drawn to the cheese milk, the cheese milk being standardized in such a manner that a cheese or cheese product of a fat content of between 20 and 25% based on the solids, is obtained, said product resembling low-fat milk having been obtained from a whey protein concentrate of a protein content of 25-50%, based on the solids, and a pH value of 5.9-6.7, calcium ions having been added to this concentrate, whereafter this concentrate has been subjected to a heat treatment and a homogenization, adding a mesophilic starter culture together with a mixed culture APS₁₃, being a mixture of thermophilic acid bacteria, which has been deposited under No. CBS 483.86, to the cheese milk, coagulating the milk and treating the obtained curd in a conventional manner for the preparation of a half-hard cheese product, which, after brining, is subjected to a ripening.

By the practice of the process according to the invention, a smooth creamy product is obtained in spite of the low fat content. In comparison with commercially available 20⁺ cheeses, the cheeses prepared in accordance with the invention possessed a much less tough consistency, i.e. a consistency which is associated with a much fatter cheese. Also the flavour of these novel cheeses was found to be excellent.

In the process according to the invention, a fresh cheese is basically prepared in a conventional manner. The excellent and advantageous properties of the 20⁺ cheeses or cheese products are attributable to the use of a special low-fat milk-like product and a special mixed culture. It is noted that both the low-fat milk-like product and the mixed culture are already known from the prior art, but the prior art nowhere suggests the combination of this product and this culture and certainly not for the preparation of a cheese with a relatively low fat content.

The product similar to low-fat milk as used in the process according to the invention is known per se from Dutch patent application 9101127 and EP-A-0 520 581, which are incorporated herein by reference. The whey protein concentrate from which the product resembling low-fat milk is prepared is obtained through ultrafiltration. The average particle size of the whey protein particles is only 1.2 µm. Both the method of preparation and the product properties are clearly different from those of the protein particles described in EP-A-0 427 307.

The product resembling low-fat milk as prepared in accordance with the Dutch patent application referred to, binds water and influences the consistency of a cheese product. It is added to cheese milk in an amount of approximately 0.2-2%, based on the cheese milk. The cheese milk, either before or after the addition of the product resembling low-fat milk, is standardized in such a manner that after conventional cheese making steps a cheese of a fat content of between 20 and 25%, based on the solids, is obtained.

The APS₁₃ mixed culture used is described in European patent application 0 359 295. This application describes a method for preparing cheeses with a flavour profile not previously described. It appears from the examples of this patent application that only 40⁺ and 30⁺ cheeses are prepared.

It is quite surprising that both known products as used in the process according to the invention give a 20⁺ cheese which resembles a full-cream cheese in consistency and flavour profile.

A 20⁺ cheese or cheese product prepared in accordance with the process of the invention consists entirely of intrinsic milk substances.

In a conventional ripening process, the fresh cheese, after being brined, is stored in a cheese store at a temperature of approximately 15°C, for instance for 11 to 12 weeks.

In a preferred embodiment of the process according to the invention, the cheese is subjected to the following ripening process:
3-5 weeks at a temperature between 12 and 15°C;
4-6 weeks at a temperature between 18 and 20°C; and finally
1-3 weeks at a temperature between 12 and 15°C. By storing the cheeses for 4 to 6 weeks at a slightly higher temperature (18-20°C), a flavour develops which strongly resembles the flavour of a full-cream Gouda cheese.

Preferably, the first and third ripening steps are carried out at 14°C.

In particular, an excellent 20⁺ cheese or cheese product is obtained if the ripening process lasts 11-12 weeks.

In order to prevent butyric acid fermentation during the cheese making process, the cheese milk may priorly be subjected to bactofugation, or lysozyme can be added to the cheese milk.

Finally, the invention relates to a cheese or cheese product obtainable by the use of the process according to the invention. This cheese is different from known 20⁺ cheeses, which have a clearly tougher consistency and a flatter taste.

### Example 1

For the preparation of a batch of cheese, the starting material was 380 liters of partially creamed milk, which had been standardised to a fat content of 1.1 wt.%. Added to this were 2 kilograms of a dried whey protein concentrate of a protein content of 35 wt.% as prepared in accordance with Dutch patent application 9101127, this product having been dissolved in 18 liters of cold water. The 400 liters of cheese milk thus obtained had a fat content of 1.05 wt.% and a protein content of 3.40 wt.%, based on the weight of the cheese milk. Immediately prior to the cheese making, the milk was conventionally pasteurised at 74°C and cooled down to the renetting temperature of 33°C.

Then, in a cheese vat, the following was added to the cheese milk: 2 liters of active mesophilic starter (type Bos, available from the Coöperatieve Stremsel en Kleurselfabriek CSK), 4 liters of the active mixed culture APS₁₃ (available from NIZO, Ede, Netherlands), 80 grams of a 35% calcium chloride solution, 1 ml of a commercial preparation annatto cheese colouring (CSK) and 80 grams of a rennet preparation, marketed by the Coöperatieve Stremsel en Kleurselfabriek CSK.

The coagulation of the milk and the cutting and treating of the curd obtained was carried out according to the common procedures. A part of the cheese whey was decanted and to the remainder was added 35% curd-washing water of a temperature such that the whey-curd mixture acquired a temperature of 32°C.

After a total processing time of 70 minutes, the curd mass was drained and charged in appropriate amounts to 5 cheese vats for 8 kilo cheeses. The resultant cheeses were, after a conventional pressing program, brined for 40 hours in a brining basin of normal strength.

Then the cheeses were stored on shelves in a cheese store at a temperature of 14°C and provided in a conventional manner with a number of cheese coating layers.

At the age of 14 days, one of the cheeses was sampled, and the following composition was found:

| | |
|---|---|
| moisture content | 51.6 wt.% |
| fat content (based on solids) | 23.3 wt.% |
| salt content (based on solids) | 3.9 wt.% |
| pH | 5.3 |

The other cheeses were transferred at the age of 4 weeks to a cheese cell with a temperature of 19°C, where they resided for 5 weeks. Finally, the cheeses were taken back to the cheese store with a temperature of 14°C.

At the age of 12 weeks the cheeses were ready for consumption and possessed a consistency associated with a considerably fatter cheese, such as 45⁺ cheese. Compared with 20⁺ cheeses prepared in the conventional manner, the consistency was much less tough. The ripened cheese flavour was judged as being first-class.

### Example 2

The method according to claim 1 was repeated, with 40 ml lysozyme-hydrochloride of a strength of 22% being added to the 400 liters of cheese milk.

Again an excellent 20⁺ cheese was prepared.

## Claims

1. A process for the preparation of a cheese or cheese product, comprising the steps of adding a product resembling low-fat milk to cheese milk in an amount of 0.2-2 wt.%, based on the dried solids and drawn to the cheese milk, the cheese milk being standardized in such a manner that a cheese or cheese product of a fat content of between 20 and 25% based on the solids, is obtained, said product resembling low-fat milk having been obtained from a whey protein concentrate of a protein content of 25-50%, based on the solids, and a pH value of 5.9-6.7, calcium ions having been added to this concentrate, whereafter this concentrate has been subjected to a heat treatment and a homogenization, adding a mesophilic starter culture together with a mixed culture APS₁₃, being a mixture of thermophilic acid bacteria, which has been deposited under No. CBS 483.86, to the cheese milk, coagulating the milk and treating the obtained curd in a conventional manner for the preparation of a half-hard cheese product, which, after brining, is subjected to a ripening.

2. A process according to claim 1, wherein the cheese is subjected to the following ripening process:
3-5 weeks at a temperature between 12 and 15°C;
4-6 weeks at a temperature between 18 and 20°C; and finally
1-3 weeks at a temperature between 12 and 15°C.

3. A process according to claim 2, wherein the first and third ripening steps are carried out at 14°C.

4. A process according to any one of the preceding claims, wherein the ripening process lasts 11-12 weeks.

5. A process according to any one of the preceding claims, wherein the cheese milk is priorly subjected to bactofugation to prevent butyric acid fermentation.

6. A process according to any one of claims 1-4, wherein lysozyme is added to the cheese milk to prevent butyric acid fermentation.

7. A cheese or cheese product obtainable by the use of the process according to any one of claims 1-6.

## Patentansprüche

1. Verfahren zur Herstellung eines Käses oder Käseproduktes, welches die folgenden Schritten umfaßt: Hinzufügen eines fettarmer Milch ähnlichen Produktes zu Käsemilch in einer Größenordnung von 0,2-2 Gewichts-%, basierend auf den getrockneten Feststoffen und bezogen auf die Käsemilch, wobei die Käsemilch in solcher Weise standardisiert wird, daß ein Käse oder ein Käseprodukt mit einem Fettgehalt von zwischen 20 und 25%, basierend auf den Feststoffen, erhalten wird, das fettarmer Milch ähnliche Produkt aus einem Molkenproteinkonzentrat mit einem Proteingehalt von 25-50%, basierend auf den Feststoffen, und einem pH-Wert von 5,9-6,7 gewonnen wurde, Kalziumionen diesem Konzentrat hinzugefügt und dieses Konzentrat danach einer Wärmebehandlung und einer Homogenisierung unterzogen wurde; Hinzufügen einer mesophilen Starterkultur zusammen mit einer aus einer Mischung aus thermophilen Säurebakterien beste-henden Mischkultur APS₁₃, welche unter der Nr. CBS 483.86 hinterlegt wurde, zur Käsemilch; Koagulieren der Milch und Behandlung der daraus entstandenen geronnenen Milch in einer herkömmlichen Weise zur Herstellung eines halb-harten Käseproduktes, welches nach einer Behandlung mit Salzlake einem Reifungsprozess unterzogen wird.

2. Verfahren nach Anspruch 1, dadurch gekennzeichnet, daß der Käse dem nachfolgenden Reifungsprozess unterzogen wird:
3-5 Wochen bei einer Temperatur von zwischen 12 und 15°C;
4-6 Wochen bei einer Temperatur von zwischen 18 und 20°C; und
abschließend 1-3 Wochen bei einer Temperatur von zwischen 12 und 15°C.

3. Verfahren nach Anspruch 2, dadurch gekennzeichnet, daß der erste und dritte Reifungsschritt bei einer Tempe-ratur von 14°C erfolgt.

4. Verfahren nach einem der vorhergehenden Ansprüche, dadurch gekennzeichnet, daß der Reifungsprozess 11-12 Wochen dauert.

5. Verfahren nach einem der vorhergehenden Ansprüche, dadurch gekennzeichnet, daß die Käsemilch zur Vermei-dung einer Buttersäuregärung zuvor einer Baktofugation unterzogen wird.

6. Verfahren nach einem der Ansprüche 1 bis 4, dadurch gekennzeichnet, daß der Käsemilch zur Vermeidung einer Buttersäuregärung Lyozym hinzugefügt wird.

7. Käse oder Käseprodukt, welches durch Anwendung des Verfahrens nach einem der Ansprüche 1 bis 6 gewonnen werden kann.

## Revendications

1. Procédé de préparation d'un fromage ou d'un produit à base de fromage, comprenant les phases consistant :
- à ajouter au lait de fromage, un produit ressemblant à du lait à faible teneur en matières grasses, suivant une quantité comprise entre 0,2 et 2 % en poids, à base de solides séchés et extraits du lait de fromage, le lait de fromage étant normalisé de manière telle que l'on obtient un fromage ou un produit à base de fromage ayant une teneur en matières grasses comprise entre 20 et 25 % à base de solides, ledit produit ressemblant à du lait à faible teneur en matières grasses ayant été obtenu à partir d'un concentré de protéines de petit-lait ayant une teneur en protéines comprise entre 25 et 50 %, à base de solides, et une valeur de pH comprise entre 5,9 et 6,7, des ions calcium ayant été ajoutés à ce concentré, après quoi ce concentré a été soumis à un traitement à la chaleur et à une homogénéisation,
- à ajouter au lait de fromage, la culture d'un inoculum mésophile associée à une culture mixte d'APS₁₃ qui est un mélange de bactéries acides thermophiles, ladite culture ayant été déposée sous le numéro CBS 483.86,
- à coaguler le lait et
- à traiter de manière classique le lait caillé obtenu pour la préparation d'un produit à base de fromage demi-dur qui, après saumurage, est soumis à un processus d'affinage.

2. Procédé selon la revendication 1, dans lequel le fromage est soumis au processus suivant d'affinage :
- 3 à 5 semaines à une température comprise entre 12 et 15°C ;
- 4 à 6 semaines à une température comprise entre 18 et 20°C ; et enfin
- 1 à 3 semaines à une température comprise entre 12 et 15°C.

3. Procédé selon la revendication 2, dans lequel les première et troisième phases d'affinage sont effectuées à une température de 14°C.

4. Procédé selon l'une quelconque des revendications précédentes, dans lequel le processus d'affinage dure entre 11 et 12 semaines.

5. Procédé selon l'une quelconque des revendications précédentes, dans lequel le lait de fromage est d'abord soumis à la bactofugation pour empêcher la fermentation d'acide butyrique.

6. Procédé selon l'une quelconque des revendications 1 à 4, dans lequel du lysozyme est ajouté au lait de fromage pour empêcher la fermentation d'acide butyrique.

7. Fromage ou produit à base de fromage pouvant être obtenu par l'utilisation du procédé selon l'une quelconque des revendications 1 à 6.
